# FASCICULE DE BREVET EUROPEEN

(11) **EP 4 161 762 B1**
(45) Date de publication et mention de la délivrance du brevet: **07.01.2026**
(21) Numéro de dépôt: 21734403.5
(22) Date de dépôt: 26.05.2021
(51) Int. Cl.: B29C 70/46, B29C 70/48, B29C 33/30, B29C 70/32, B29C 33/22, F01D 25/24, F02C 7/04, B29L 31/00

(54) **MOULE ET PROCÉDÉ D'INJECTION RTM UTILISANT DES SECTEURS SYMÉTRIQUES ANTI-PINCEMENT**
FORM UND VERFAHREN ZUR RTM INJEKTION MIT SYMETRISCHE ANTI-QUETSCHUNG SEKTOREN
MOULD AND METHOD OF INJECTION PER RTM USING ANTI PINCHING SYMETRICAL SECTORS

(30) Priorité: 04.06.2020 US 202063034549 P
(43) Date de publication de la demande: 12.04.2023
(73) Titulaire: SAFRAN AIRCRAFT ENGINES, 75015 Paris (FR)
(72) Inventeur: JAUSSAUD, Raoul, 77550 Moissy-Cramayel (FR); FABRE, Hubert, Jean, Marie, 77550 Moissy-Cramayel (FR); JENSEN, Brian, Bow, New Hampshire 03304 (US)
(74) Mandataire: Cabinet Beau de Loménie
(86) Numéro de dépôt international: PCT/FR2021/050959
(87) Numéro de publication internationale: WO 2021/245340

(56) Documents cités:
- US-A1- 2012 038 086
- US-A1- 2013 087 955
- US-A1- 2016 009 003

## Description

### Domaine Technique

La présente invention se rapporte au domaine général de la fabrication de pièces de révolution telles que des carters de turbine à gaz.

### Technique antérieure

Dans le domaine aéronautique, on cherche à réduire la masse des composants des moteurs tout en maintenant à un haut niveau leurs propriétés mécaniques. Par exemple, dans une turbomachine aéronautique, le carter de soufflante définissant le contour de la veine d'entrée d'air du moteur et à l'intérieur duquel est logé le rotor supportant les aubes de la soufflante est maintenant réalisé en matériau composite.

La fabrication d'un carter de soufflante en matériau composite débute par la mise en place par enroulement d'un renfort en fibres sur un mandrin dont le profil épouse celui du carter à réaliser. Le renfort fibreux peut être réalisé, par exemple, par tissage tridimensionnel ou multicouche comme cela est décrit dans le brevet US 8 322 971. Ce renfort fibreux constitue une préforme fibreuse tubulaire avec des flasques correspondant aux brides du carter. La fabrication se poursuit par la densification de la préforme fibreuse par une matrice polymère qui consiste à imprégner la préforme par une résine et à polymériser cette dernière pour obtenir la pièce finale.

L'invention concerne plus particulièrement le mode de fabrication où l'imprégnation de la préforme fibreuse est réalisée par le procédé de moulage par injection dit RTM (pour Resin Transfert Moulding). Selon ce procédé, on enferme la préforme fibreuse dans un moule rigide de géométrie figée comprenant un mandrin ou tambour sur lequel la préforme fibreuse est enroulée et un contre-moule que l'on vient déposer sur la préforme fibreuse et dont la forme correspond à la pièce de révolution que l'on souhaite obtenir, et on injecte la résine sous pression et température contrôlée à l'intérieur du moule après avoir rapproché les parois des deux parties de moule et y avoir fait le vide le cas échéant. Une fois la résine injectée, on procède à sa polymérisation par chauffage du moule et après l'injection et la polymérisation, la pièce finale est démoulée puis détourée pour enlever les excès de résine et les chanfreins sont usinés pour obtenir la pièce souhaitée, par exemple un carter.

Comme la préforme est foisonnée au moment de son enroulement sur le mandrin, c'est-à-dire qu'elle présente une surépaisseur par rapport à l'épaisseur théorique de la pièce finie, la fermeture du moule assure aussi la fonction de compactage définitif de la préforme pour l'amener à son épaisseur finale.

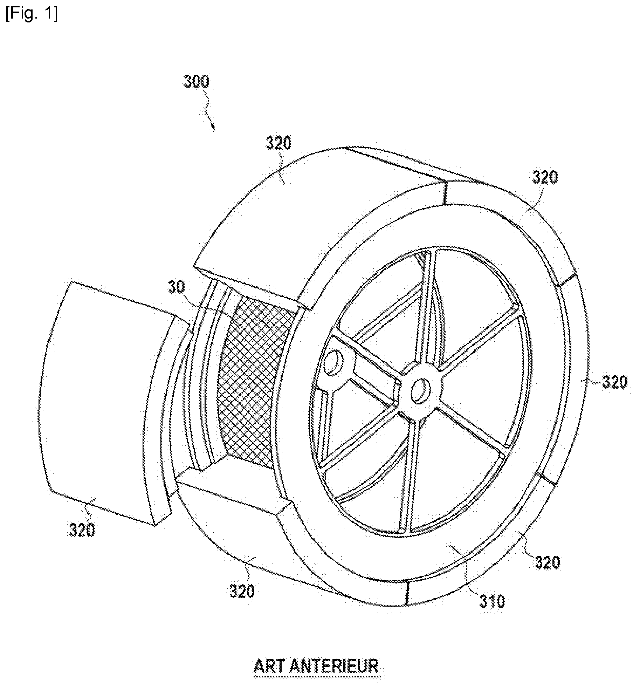

La figure 1 illustre un moule d'injection RTM 300 composé d'un tambour ou mandrin 310 sur lequel est enroulée une préforme fibreuse 30 et d'un contre-moule formé par une pluralité de secteur angulaires 320. La fermeture du moule est réalisée par les secteurs angulaires 320 qui assurent le compactage de la préforme. Un procédé de fermeture d'un tel moule est notamment décrit dans le document US 2018/370082.

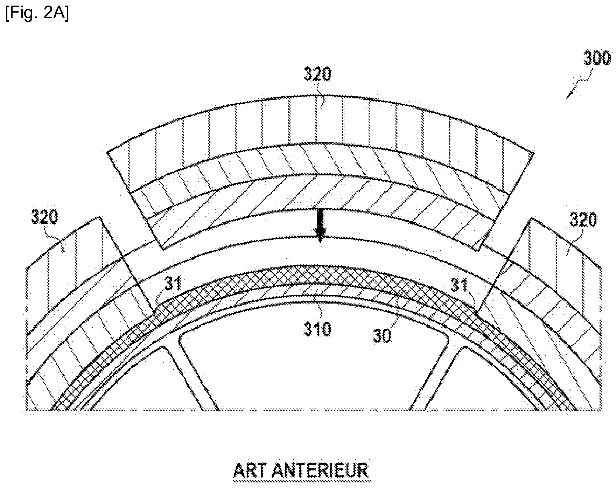

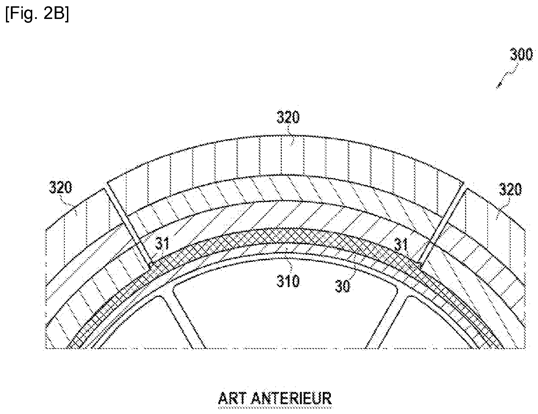

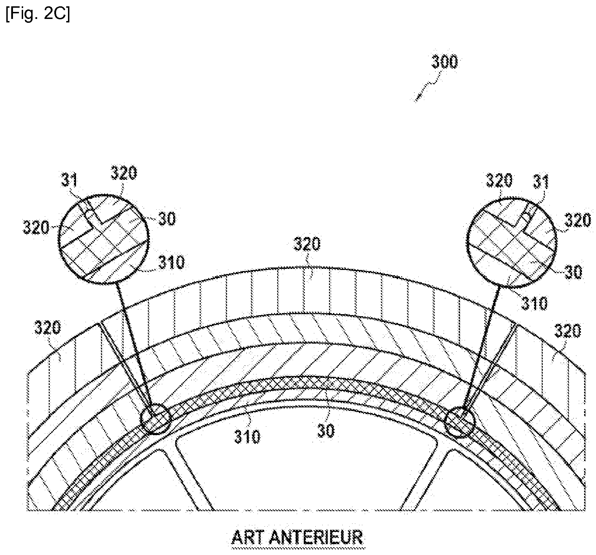

Toutefois, la fermeture du moule par de tels secteurs angulaires s'avère être une opération délicate. En effet, comme illustré sur la figure 2A, on place d'abord un secteur sur deux qui compacte chacun localement la préforme fibreuse. La préforme fibreuse 30 présente des boursouflures 31 au voisinage des extrémités de chaque secteur angulaire 320 car elle n'est plus compactée. La fermeture du moule se poursuit par le positionnement des secteurs angulaires restants entre les secteurs déjà positionnés comme illustré sur les figures 2B et 2C. Lors de la mise en place de ces secteurs, les boursouflures 31 sont repoussées contre les bords des secteurs déjà positionnés car la préforme est chassée du milieu du secteur par la compaction. En outre, la forme des secteurs et la direction de fermeture du moule font qu'il subsiste un espace entre les secteurs jusqu'au dernier moment de la fermeture du moule. Une partie des boursouflures 31 pénètrent alors dans cet espace pour être finalement pincée entre les bords des secteurs adjacents comme représenté sur la figure 2C. Les fibres de la préforme ainsi pincés peuvent entraîner une détérioration du moule, une mauvaise étanchéité de celui-ci et surtout la création de défauts dits « pinch fibers » sur la pièce finie.

Le document US 2012/038086 A1 décrit un outillage selon le préambule de la revendication 1.

### Exposé de l'invention

L'invention a pour but de proposer une solution qui évite le pincement des fibres d'une préforme lors de la fermeture d'un moule d'injection.

Ce but est atteint notamment grâce à un moule d'injection pour la fabrication d'une pièce de révolution en matériau composite comprenant :
- un mandrin destiné à supporter une préforme fibreuse formée par enroulement, le mandrin comprenant une paroi annulaire dont le profil de la surface extérieure correspond à celui de la surface interne de la pièce à fabriquer,
- une pluralité de secteurs angulaires de contre-moule assemblés sur le mandrin et destinés à fermer le moule et à compacter la préforme fibreuse enroulée sur le mandrin, chaque secteur angulaire comprenant une base annulaire destinée à venir en contact de la préforme fibreuse, la base annulaire s'étendant entre des premier et deuxième bords longitudinaux suivant une direction axiale et entre des premier et deuxième bords latéraux suivant une direction circonférentielle, le premier bord latéral de la base annulaire d'un secteur angulaire étant en contact avec un deuxième bord latéral de la base annulaire d'un secteur angulaire adjacent,
caractérisé en ce que la pluralité de secteurs angulaires comprend une première série de secteurs angulaires et une deuxième série de secteurs angulaires, les premier et deuxième bords latéraux de chaque secteur angulaire de la première série de secteurs comportant chacun une portion inférieure en saillie formant un premier angle non nul par rapport à une direction radiale, les premier et deuxième bords latéraux de chaque secteur angulaire de la deuxième série de secteurs comportant chacun une portion inférieure en retrait formant un deuxième angle non nul par rapport à une direction radiale, le premier angle et le deuxième angle étant de même mesure.

Les portions inférieures respectivement en saillie et en retrait présentes sur chaque secteur angulaire vont permettre de repousser ou « chasser » la portion de préforme qui boursouffle à l'extérieur du bord latéral du secteur angulaire. Comme la partie des bords latéraux de chaque secteur angulaires en contact avec la préforme fibreuse, à savoir les portions inférieures en saillie et en retrait, sont parallèles à la direction de fermeture, c'est-à-dire parallèle à la direction radiale au milieu du secteur, il n'y a pas d'espace entre les deux secteurs au moment de la fermeture. On réduit ainsi considérablement le risque de pincement des fils et, par conséquent, de la préforme. Il est ainsi possible de compacter une préforme avec chacun des secteurs angulaires sans risque de pincement de celle-ci à la jonction entre deux secteurs adjacents.

Selon une caractéristique particulière du moule de l'invention, chaque secteur angulaire des première et deuxième séries de secteurs comporte une première face latérale parallèle à la direction radiale et présente dans le prolongement du premier bord latéral de la base annulaire et une deuxième face latérale parallèle à la direction radiale et présente dans le prolongement du deuxième bord latéral de la base annulaire. Cela permet d'avoir des angles moins saillants.

Selon encore une autre caractéristique particulière du moule de l'invention, le premier angle non nul par rapport à la direction radiale formé par la portion inférieure en saillie des bords latéraux d'un secteur angulaire de la première série de secteurs est compris entre 18° et 45°.

L'invention a encore pour objet un procédé de fermeture d'un moule d'injection pour la fabrication d'une pièce de révolution en matériau composite, le moule comprenant :
- un mandrin supportant une préforme fibreuse obtenue par enroulement d'une bande fibreuse, le mandrin comprenant une paroi annulaire dont le profil de la surface extérieure correspond à celui de la surface interne de la pièce à fabriquer,
- une pluralité de secteurs angulaires comprenant une base annulaire destinée à venir en contact de la texture fibreuse, la base annulaire s'étendant entre des premier et deuxième bords longitudinaux suivant une direction axiale et entre des premier et deuxième bords latéraux suivant une direction circonférentielle,
caractérisé en ce que la pluralité de secteurs angulaires comprend une première série de secteurs angulaires et une deuxième série de secteurs angulaires, les premier et deuxième bords latéraux de chaque secteur angulaire de la première série de secteurs comportant chacun une portion inférieure en saillie formant un premier angle non nul par rapport à une direction radiale, les premier et deuxième bords latéraux de chaque secteur angulaire de la deuxième série de secteurs comportant chacun une portion inférieure en retrait formant un deuxième angle non nul par rapport à une direction radiale, le premier angle et le deuxième angle étant de même mesure et en ce que le procédé comprend le positionnement et la fixation successifs de chaque secteur angulaire sur le mandrin, la base annulaire de chaque secteur compactant la portion de préforme fibreuse présente en vis-à-vis, les bords latéraux de la base annulaire d'un secteur angulaire de la première série de secteurs en cours de positionnement étant maintenus en contact avec les bords latéraux de la base annulaire de secteurs angulaires de la deuxième série de secteurs déjà fixés sur le mandrin.

Selon une caractéristique particulière du procédé de l'invention, les secteurs angulaires de la deuxième série de secteurs sont d'abord positionnés et fixés sur le mandrin à une distance déterminée les uns des autres de manière à ménager un espace entre deux secteurs angulaires de la deuxième série de secteurs, les secteurs angulaires de la première série de secteurs étant ensuite positionnés et fixés sur le mandrin dans les espaces ménagés entre les secteurs angulaires de la deuxième série de secteurs.

Selon une autre caractéristique particulière du procédé de l'invention, chaque secteur angulaire des première et deuxième séries de secteurs comporte une première face latérale parallèle à la direction radiale et présente dans le prolongement du premier bord latéral de la base annulaire et une deuxième face latérale parallèle à la direction radiale et présente dans le prolongement du deuxième bord latéral de la base annulaire.

Selon une autre caractéristique particulière du procédé de l'invention, le premier angle non nul par rapport à la direction radiale formé par la portion inférieure en saillie des bords latéraux d'un secteur angulaire de la première série de secteurs est compris entre 18° et 45°.

### Brève description des dessins

[Fig. 1] La figure 1 est une vue schématique en perspective d'un moule d'injection selon l'art antérieur,
[Fig. 2A] La figure 2A est une vue partielle en coupe radiale montrant une étape de fermeture du moule de la figure 1,
[Fig. 2B] La figure 2B est une vue partielle en coupe radiale montrant une autre étape de fermeture du moule de la figure 1,
[Fig. 2C] La figure 2C est une vue partielle en coupe radiale montrant une autre étape de fermeture du moule de la figure 1,
[Fig. 3] La figure 3 est une vue schématique en perspective d'un carter de soufflante en matériau composite,
[Fig. 4] La figure 4 est une vue schématique en perspective d'un moule d'injection conformément à un mode de réalisation de l'invention,
[Fig. 5] La figure 5 est une vue schématique en perspective montrant un secteur angulaire d'une première série de secteurs du moule de la figure 4,
[Fig. 6] La figure 6 est une vue schématique en perspective montrant un secteur angulaire d'une deuxième série de secteurs du moule de la figure 4,
[Fig. 7] La figure 7 est une vue en coupe radiale du moule d'injection de la figure 4 avec une première série de secteurs angulaire positionnés,
[Fig. 8A] La figure 8A est une vue partielle en coupe radiale montrant le début de positionnement d'un secteur angulaire lors de la fermeture du moule de la figure 4,
[Fig. 8B] La figure 8B est une vue partielle en coupe radiale montrant la progression du positionnement du secteur angulaire de la figure 8A,
[Fig. 8C] La figure 8C est une vue partielle en coupe radiale montrant le moule de la figure 4 fermé.

### Description des modes de réalisation

L'invention s'applique d'une manière générale à tout carter en matériau composite à matrice organique de turbine à gaz.

L'invention sera décrite ci-après dans le cadre de son application à un carter de soufflante de moteur aéronautique à turbine à gaz.

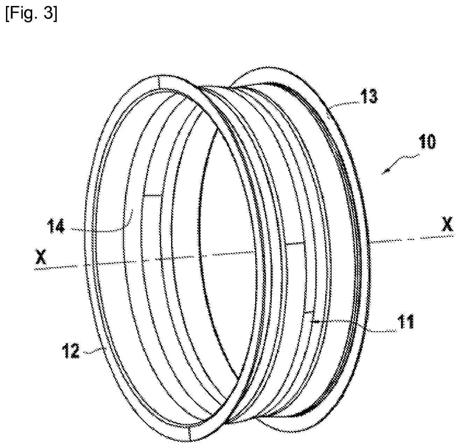

La figure 3 montre une vue en perspective d'un carter de soufflante 10 pouvant être fabriqué en utilisant un moule et un procédé selon l'invention. Un tel carter est centré sur un axe longitudinal X-X et comprend une paroi annulaire 11 délimitée à l'amont par une bride amont 12 et à l'aval par une bride aval 13 (l'amont et l'aval étant définis par rapport au sens d'écoulement du flux gazeux dans la turbine à gaz). La surface interne 14 de la paroi annulaire 11 est destinée à délimiter la veine d'entrée d'air dans la turbine à gaz ou supporter des panneaux, viroles, etc. qui définissent cette veine.

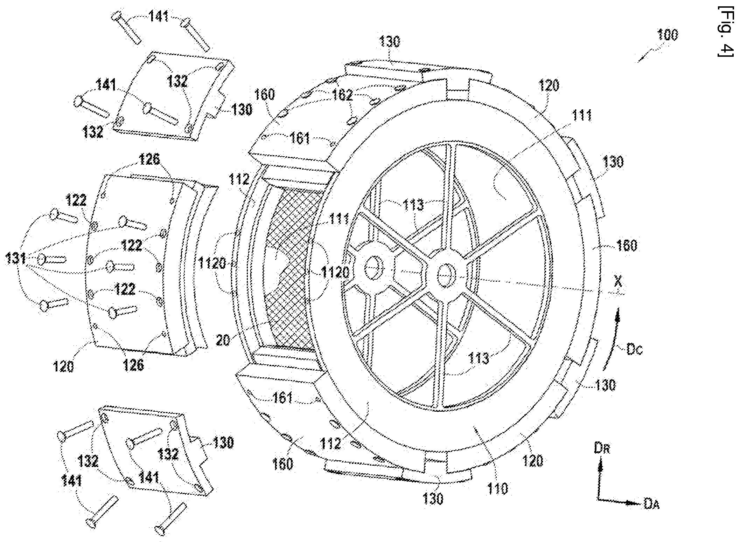

La figure 4 est une vue schématique en perspective d'un moule selon l'invention en cours de fermeture. Un tel moule peut être utilisé pour l'imprégnation par un procédé du type RTM (« Resin Transfer Molding ») d'une préforme fibreuse afin de fabriquer un carter de soufflante 10 tel que celui présenté précédemment. La préforme fibreuse peut être réalisée par tissage tridimensionnel d'une texture fibreuse en forme bande avec des fibres, par exemple de carbone, verre, aramide ou céramique, et la matrice d'imprégnation peut être en polymère, par exemple époxide, bismaléimide ou polyimimde.

Le moule 100 est monté de façon rotative sur un axe d'entraînement (non représenté) centré sur l'axe X-X, et comprend un mandrin 110. Par la suite, les directions axiale D_{A} et radiale D_{R} seront définies par rapport à cet axe X-X, la direction axiale D_{A} étant parallèle à l'axe X-X et la direction radiale DR étant perpendiculaire à l'axe X-X. Il sera également fait référence à une direction circonférentielle D_{C} qui, comme montrée sur la figure 4, correspond à une direction qui est tangente à tout cercle centré sur l'axe X-X. Cette direction est perpendiculaire à la fois à la direction axiale D_{A} et à une direction radiale D_{R}.

Le mandrin 110 comprend une paroi annulaire 111 prenant la forme d'un fût supportant une préforme fibreuse 20 formée par enroulement d'une bande fibreuse, et deux flasques latéraux 112. Le mandrin 110 est maintenu sur son axe d'entraînement par l'intermédiaire de rayons 113.

Les flasques 112 forment un appui destiné à recevoir les parties rabattues de la préforme 20 enroulée sur le mandrin 110, et qui sont destinées à former les brides amont 12 et aval 13 du carter de soufflante 10.

Le moule 100 comprend en outre un contre-moule composé d'une pluralité de secteurs angulaires 120 et 160 assemblés de façon étanche sur le mandrin 110, et verrouillés entre eux de façon étanche par des clefs de verrouillage 130 qui maintiennent un joint plat entre les secteurs (non représenté sur la figure 4). Selon une variante de réalisation, les secteurs peuvent être directement verrouillés entre eux par boulonnage en utilisant des vis obliques. Dans ce cas, l'étanchéité entre les secteurs est réalisée par compaction d'un joint logé dans des rainures présentes sur les bords latéraux des secteurs comme expliqué ci-après.

Plus précisément, la pluralité de secteurs angulaires comprend une première série de secteurs angulaires 120 (ici au nombre de trois) et une deuxième série de secteurs angulaires 160 (ici au nombre de trois) disposés alternativement autour du mandrin 110.

Les secteurs angulaires respectivement 120 et 160 sont assemblés sur les flasques latéraux 112 par des vis de serrage 131 passant dans des orifices respectivement 122 et 162 présents dans les secteurs et vissées dans des trous taraudés 1120 présents sur les flasques latéraux 112. Les vis 131 permettent l'assemblage des secteurs 120 et 160 sur les flasques 112 et le réglage de la pression de compaction qui est appliquée sur la préforme fibreuse 20. Les trous taraudés peuvent être remplacés par des boulons insérés dans des cages, ce qui facilite la maintenance dans le cas d'un moule en aluminium.

Dans l'exemple décrit ici, les secteurs angulaires 120 et 160 sont verrouillés entre eux par des vis de serrage 141 passant dans des orifices 132 présents dans les clefs de verrouillage 130 et vissées dans trous taraudés respectivement 126 et 161 présents sur les secteurs angulaires 120 et 160. Une clef 130 est fixée entre deux secteurs 120 et 160 adjacents par deux rangées de vis 141 s'étendant longitudinalement sur les extrémités de chaque secteur. L'assemblage des clefs de verrouillage 130 se fait radialement par l'extérieur, une fois les secteurs assemblés sur le mandrin 110. De la sorte, les clefs assurent un serrage circonférentiel des secteurs 120 et 160 entre eux.

Des joints toriques (non représentés) positionnés sur les flasques 112 assurent l'étanchéité entre les secteurs 120 et 160 et le mandrin 110.

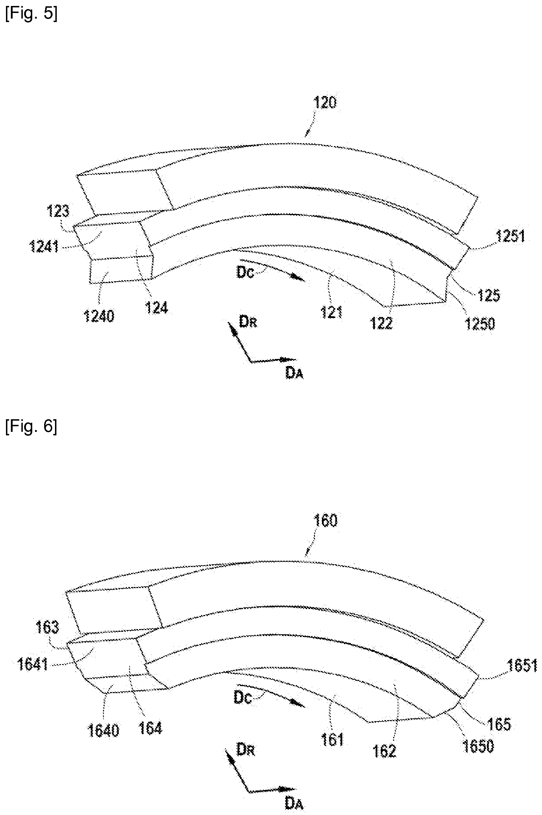

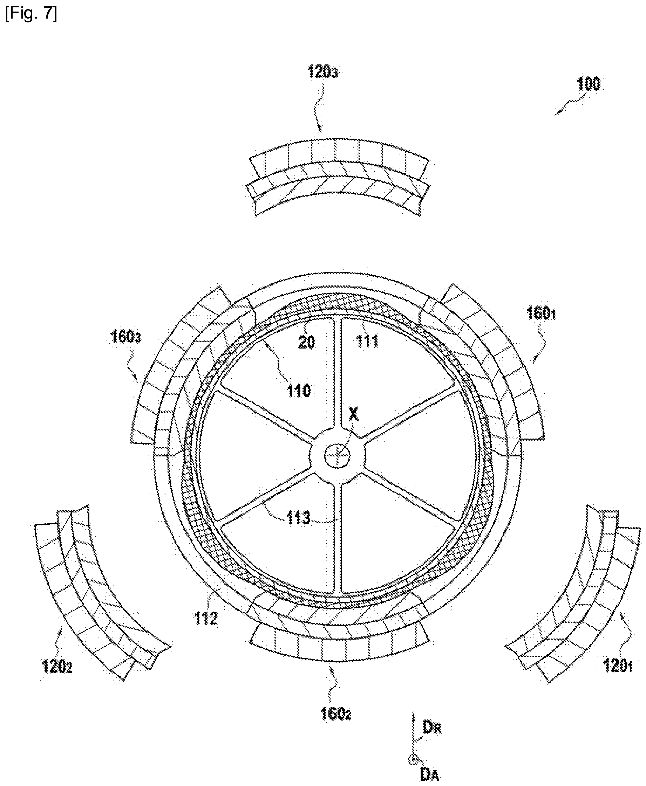

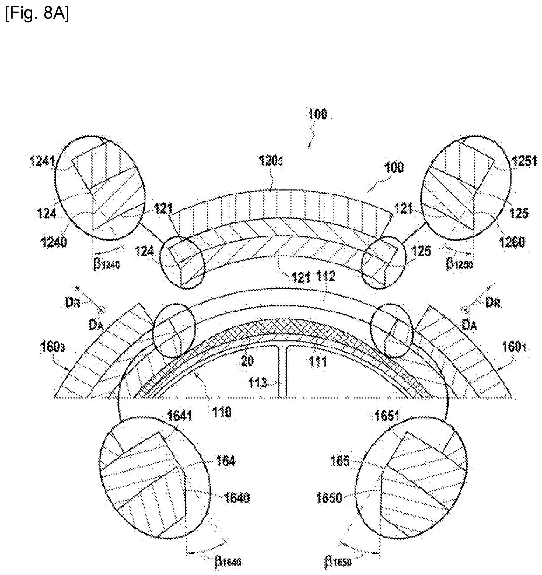

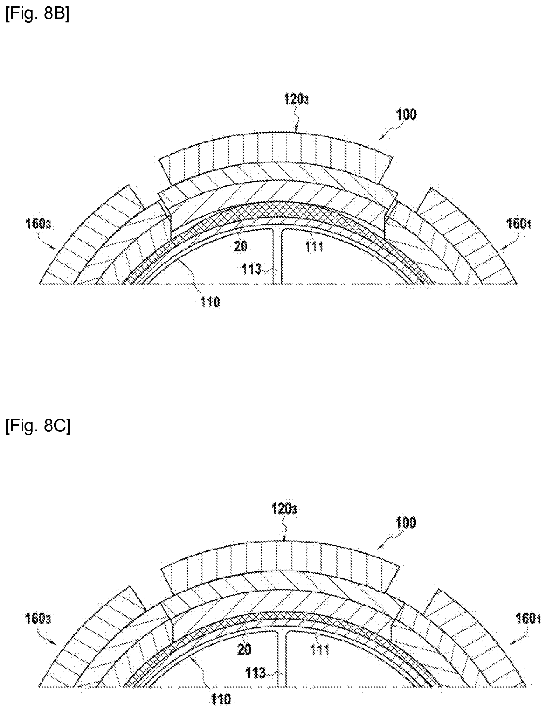

La figure 5 illustre un secteur angulaire 120 de la première série de secteurs angulaires conformément à un mode de réalisation de l'invention. Chaque secteur angulaire 120 comprend une base annulaire 121 destinée à venir en contact de la texture fibreuse 20. La base annulaire s'étend entre des premier et deuxième bords longitudinaux 122 et 123 suivant la direction axiale D_{A} et entre des premier et deuxième bords latéraux 124 et 125 suivant la direction circonférentielle D_{C}, le premier bord latéral 124 de la base annulaire 121 d'un secteur angulaire 120 étant en contact avec un deuxième bord latéral 165 de la base annulaire d'un secteur angulaire adjacent 160 de la deuxième série de secteurs angulaires tandis que le deuxième bord latéral 125 de la base annulaire 121 d'un secteur angulaire 120 est en contact avec un premier bord latéral 164 de la base annulaire d'un secteur angulaire adjacent 160 de la deuxième série de secteurs angulaires (figure 8C). Le premier bord latéral 124 de la base annulaire 121 de chaque secteur angulaire 120 comporte une portion inférieure en saillie 1240 en forme de pente formant un premier angle β₁₂₄₀ non nul par rapport à une direction radiale D_{R}. De même, le deuxième bord latéral 125 de la base annulaire 121 de chaque secteur angulaire comporte une portion inférieure en saillie 1250 en forme de pente formant un deuxième angle β₁₂₅₀ non nul par rapport à la direction radiale D_{R}, les premier et deuxième angles β₁₂₄₀ et P₁₂₅₀ étant de même mesure (figure 8A).

La figure 6 illustre un secteur angulaire 160 de la deuxième série de secteurs angulaires conformément à un mode de réalisation de l'invention. Chaque secteur angulaire 160 comprend une base annulaire 161 destinée à venir en contact de la texture fibreuse 20. La base annulaire s'étend entre des premier et deuxième bords longitudinaux 162 et 163 suivant la direction axiale D_{A} et entre des premier et deuxième bords latéraux 164 et 165 suivant la direction circonférentielle D_{C}, le premier bord latéral 164 de la base annulaire 161 d'un secteur angulaire 160 étant en contact avec un deuxième bord latéral 125 de la base annulaire d'un secteur angulaire adjacent 120 de la première série de secteurs angulaires tandis que le deuxième bord latéral 165 de la base annulaire 161 d'un secteur angulaire 160 est en contact avec un premier bord latéral 124 de la base annulaire d'un secteur angulaire adjacent 120 de la première série de secteurs angulaires (figure 8C). Le premier bord latéral 164 de la base annulaire 161 de chaque secteur angulaire 160 comporte une portion inférieure en retrait 1640 en forme de pente formant un premier angle β₁₆₄₀ non nul par rapport à une direction radiale D_{R}. De même, le deuxième bord latéral 165 de la base annulaire 161 de chaque secteur angulaire comporte une portion inférieure en retrait 1650 en forme de pente formant un deuxième angle β₁₆₅₀ non nul par rapport à la direction radiale D_{A}, les premier et deuxième angles β₁₆₄₀ et β₁₆₅₀ étant de même mesure (figure 8A). Les angles β₁₂₄₀, β₁₂₅o, β₁₆₄₀ et β₁₆₅₀ sont tous de même mesure.

La figure 7 illustre un procédé de fermeture du moule 100 avec les secteurs angulaires 120 de la première série de secteurs et les secteurs angulaires 160 de la deuxième série de secteurs conformément à un mode de réalisation de l'invention. Dans ce mode de réalisation, on place tout d'abord les secteurs angulaires 160 de la deuxième série de secteurs. Après avoir compacté la préforme 20, les secteurs angulaire 160 sont fixés sur le mandrin 110 du moule 100 à des positions espacées les unes des autres de manière à permettre l'insertion des secteurs angulaires 120 de la première série de secteurs entre deux secteurs angulaires 160 lors de la finalisation de la fermeture du moule. Une fois les secteurs angulaires 160 positionnés et fixés sur le mandrin 100, on place et on fixe les secteurs angulaires 120 de la première série de secteurs.

Les figures 8A à 8C illustrent le positionnement d'un secteur angulaire 120 de la première série de secteurs lors de la finalisation de la fermeture du moule 100. Plus précisément, sur la figure 8A, un dernier secteur angulaire 120₃ de la première série est en cours de positionnement entre deux secteurs angulaires 160₁ et 160₃ de la deuxième série déjà positionnés afin de finaliser la fermeture du moule 100. Grâce à sa configuration en saillie et son contact avec la portion en retrait complémentaire du secteur adjacent lors du positionnement du secteur 120₃, les portions inférieures en saillie 1240 et 1250 présentes respectivement sur les bords latéraux 124 et 125 du secteur va repousser ou « chasser » la portion de préforme 20 qui boursouffle à l'extérieur du bord latéral 165 du secteur angulaire 160₃ et la portion de préforme 20 qui boursouffle à l'extérieur du bord latéral 164 du secteur angulaire 160₁. Comme la partie des bords latéraux de chaque secteur angulaires en contact avec la préforme fibreuse 20, à savoir les portions inférieures en saille 1240 et 1250 et les portions inférieures en retrait 1640 et 1650, sont parallèles à la direction de fermeture, c'est-à-dire parallèle à la direction radiale D_{R} au milieu du secteur, il n'y a pas d'espace entre les deux secteurs au moment de la fermeture. On réduit ainsi considérablement le risque de pincement de ces fils et, par conséquent, de la préforme.

Sur la figure 8B, on constate que les portions en saillie 1240 et 1250 du secteur angulaire 120₃ sont en contact avec les portions en retrait 1640 et 1650 respectivement des secteurs angulaires 160₁ et 160₃ dès le début de la mise en place du secteur angulaire 120₃. Cette mise en contact très tôt lors du positionnement du secteur est rendu possible par la coopération de deux bords latéraux présentant respectivement une portion en retrait et une portion en saillie comme décrites ci-avant, les deux portions inférieures présentant des pentes complémentaires.

Il est ainsi possible de compacter la préforme 20 avec chacun des secteurs angulaires 120 sans risque de pincement de celle-ci entre deux secteurs adjacents comme représenté sur la figure 8C.

Chaque secteur angulaire 120, respectivement 160, comporte en outre une première face latérale 1241, respectivement 1641, parallèle à la direction radiale D_{R} et présente dans le prolongement du premier bord latéral 124, respectivement 164, de la base annulaire 121, respectivement 161, et une deuxième face latérale 1251, respectivement 1651, parallèle à la direction radiale D_{R} et présente dans le prolongement du deuxième bord latéral 125, respectivement 165, de la base annulaire 121, respectivement 161.

Selon une caractéristique particulière de l'invention, les premiers angle β₁₂₄₀ et β₁₂₅₀ non nul par rapport à la direction radiale formé par les portions inférieures en saillie 1240 et 1250 respectivement des premier et deuxième bords latéraux 124 et 125 d'un secteur angulaire 120 est compris entre 18° et 45°.

La fabrication du carter 10 représenté sur la figure 3 débute par la réalisation d'une texture fibreuse par tissage tridimensionnel entre des fils de chaîne et des fils de trame. Par « tissage tridimensionnel » ou « tissage 3D », on entend ici un mode de tissage par lequel certains au moins des fils de trame lient des fils de chaîne sur plusieurs couches de fils de chaîne ou inversement. La texture fibreuse peut présenter une armure de tissage interlock. Par tissage « interlock », on entend ici une armure de tissage dans laquelle chaque couche de fils de trame lie plusieurs couches de fils de chaîne, avec tous les fils d'une même colonne de trame ayant le même mouvement dans le plan de l'armure. D'autres armures de tissage sont envisageables. Les fils utilisés peuvent être notamment des fils en fibres de carbone, de verre ou de carbure de silicium. La texture fibreuse présente une forme de bande qui est enroulée sur plusieurs tours sur le mandrin 110 du moule 100 pour former la préforme fibreuse 20.

Le moule 100 est ensuite fermé au moyen des secteurs angulaires 120 et 160 décrits précédemment, ces secteurs réalisant en outre un compactage de la préforme 20.

On procède ensuite à la densification de la préforme fibreuse qui consiste à combler la porosité de cette dernière par le matériau constitutif de la matrice. A cet effet, on injecte le précurseur liquide de matrice, par exemple une résine, dans toute la préforme présente dans le moule. La transformation du précurseur en matrice organique, à savoir sa polymérisation, est réalisée par traitement thermique, généralement par chauffage du moule, après élimination du solvant éventuel et réticulation du polymère, la préforme étant toujours maintenue dans le moule ayant une forme correspondant à celle de la pièce à réaliser. La matrice organique peut être notamment obtenue à partir de résines époxydes, telle que, par exemple, la résine époxyde à hautes performances vendue, ou de précurseurs liquides de matrices carbone ou céramique.

La densification de la préforme fibreuse peut être réalisée par le procédé bien connu de moulage par transfert dit RTM (« Resin Transfert Moulding ») qui consiste à injecter une résine thermodurcissable dans l'espace interne du moule contenant la préforme fibreuse, un gradient de pression étant généralement établi dans cet espace interne entre l'endroit où est injecté la résine et les orifices d'évacuation de cette dernière afin de contrôler et d'optimiser l'imprégnation de la préforme par la résine. Une fois la résine injectée dans toute la préforme, on procède à sa polymérisation par traitement thermique conformément au procédé RTM.

Après l'injection et la polymérisation, la pièce est démoulée. La pièce est finalement détourée pour enlever l'excès de résine et les chanfreins sont usinés pour obtenir un carter 10 présentant une forme de révolution comme illustré sur la figure 3.

## Revendications

1. Moule d'injection (100) pour la fabrication d'une pièce de révolution en matériau composite (10) comprenant :
- un mandrin (110) destinée à supporter une préforme fibreuse (20) formée par enroulement, le mandrin comprenant une paroi annulaire (111) dont le profil de la surface extérieure correspond à celui de la surface interne (14) de la pièce à fabriquer,
- une pluralité de secteurs angulaires (120, 160) de contre-moule assemblés sur le mandrin et destinés à fermer le moule et à compacter la préforme fibreuse (20) enroulée sur le mandrin, chaque secteur angulaire (120) comprenant une base annulaire (121) destinée à venir en contact de la préforme fibreuse, la base annulaire s'étendant entre des premier et deuxième bords longitudinaux (122, 123) suivant une direction axiale (D_{A}) et entre des premier et deuxième bords latéraux (124, 125) suivant une direction circonférentielle (D_{C}), le premier bord latéral (124) de la base annulaire (121) d'un secteur angulaire (120) étant en contact avec un deuxième bord latéral (165) de la base annulaire (161) d'un secteur angulaire adjacent (160), la pluralité de secteurs angulaires comprenant une première série de secteurs angulaires (120) et une deuxième série de secteurs angulaires (160), **caractérisé en ce que** les premier et deuxième bords latéraux (124, 125) de chaque secteur angulaire de la première série de secteurs (120) comportant chacun une portion inférieure en saillie (1240, 1250) formant un premier angle (β₁₂₄₀, β₁₂₅₀) non nul par rapport à une direction radiale (D_{R}), les premier et deuxième bords latéraux (164, 165) de chaque secteur angulaire de la deuxième série de secteurs (160) comportant chacun une portion inférieure en retrait (1640, 1650) formant un deuxième angle (β₁₆₄₀, β₁₆₅₀) non nul par rapport à une direction radiale (D_{R}), le premier angle (β₁₂₄₀, β₁₂₅₀) et le deuxième angle (β₁₆₄₀, β₁₆₅₀) étant de même mesure.

2. Moule d'injection selon la revendication 1 ou 2, dans lequel chaque secteur angulaire (120, 160) des première et deuxième séries de secteurs comporte une première face latérale (1241, 1641) parallèle à la direction radiale (D_{R}) et une deuxième face latérale (1251, 1651) parallèle à la direction radiale.

3. Moule d'injection selon la revendication 2, dans lequel chaque secteur angulaire (120, 160) comporte des première et deuxième rainures (1242, 1252, 1642, 1652) présentes respectivement sur les première et deuxième faces latérales (1241, 1251, 1641, 1651), les rainures s'étendant suivant la direction axiale (D_{A}), un joint d'étanchéité (150) étant logé à la fois dans la première rainure (1242, 1642) d'une première face latérale d'un secteur angulaire et dans la deuxième rainure (1252, 1652) d'une deuxième face latérale d'un secteur angulaire adjacent.

4. Moule d'injection selon la revendication 1 ou 2, dans lequel le premier angle (β₁₂₄₀, β₁₂₅₀) non nul par rapport à la direction radiale formé par la portion inférieure en saillie (1240, 1250) des bords latéraux (124, 125) d'un secteur angulaire (120) de la première série de secteurs est compris entre 18° et 45°.

5. Procédé de fermeture d'un moule d'injection (100) pour la fabrication d'une pièce de révolution en matériau composite, le moule comprenant :
- un mandrin (110) supportant une préforme fibreuse (20) obtenue par enroulement d'une bande fibreuse, le mandrin comprenant une paroi annulaire (111) dont le profil de la surface extérieure correspond à celui de la surface interne (14) de la pièce à fabriquer,
- une pluralité de secteurs angulaires (120) comprenant une base annulaire (121) destinée à venir en contact de la texture fibreuse (20), la base annulaire s'étendant entre des premier et deuxième bords longitudinaux (122, 123) suivant une direction axiale (D_{A}) et entre des premier et deuxième bords latéraux (124, 125) suivant une direction circonférentielle (D_{C}), la pluralité de secteurs angulaires comprenant une première série de secteurs angulaires (120) et une deuxième série de secteurs angulaires (160), les premier et deuxième bords latéraux (124, 125) de chaque secteur angulaire de la première série de secteurs (120) comportant chacun une portion inférieure en saillie (1240, 1250) formant un premier angle (β₁₂₄₀, β₁₂₅₀) non nul par rapport à une direction radiale (D_{R}), les premier et deuxième bords latéraux (164, 165) de chaque secteur angulaire de la deuxième série de secteurs (160) comportant chacun une portion inférieure en retrait (1640, 1650) formant un deuxième angle (β₁₆₄₀, β₁₆₅₀) non nul par rapport à une direction radiale (D_{R}), le premier angle (β₁₂₄₀, β₁₂₅₀) et le deuxième angle (β₁₆₄₀, β₁₆₅₀) étant de même mesure et en ce que le procédé comprend le positionnement et la fixation successifs de chaque secteur angulaire (120, 160) sur le mandrin (110), la base annulaire (121, 161) de chaque secteur compactant la portion de préforme fibreuse présente en vis-à-vis, les bords latéraux (124, 125) de la base annulaire (121) d'un secteur angulaire (120) de la première série de secteurs en cours de positionnement étant maintenus en contact avec les bords latéraux (164, 165) de la base annulaire (161) de secteurs angulaires (160) de la deuxième série de secteurs déjà fixés sur le mandrin.

6. Procédé selon la revendication 5, dans lequel les secteurs angulaires (160) de la deuxième série de secteurs sont d'abord positionnés et fixés sur le mandrin (110) à une distance déterminée les uns des autres de manière à ménager un espace entre deux secteurs angulaires (160) de la deuxième série de secteurs, les secteurs angulaires (120) de la première série de secteurs étant ensuite positionnés et fixés sur le mandrin dans les espaces ménagés entre les secteurs angulaires (160) de la deuxième série de secteurs.

7. Procédé selon la revendication 5 ou 6, dans lequel chaque secteur angulaire (120, 160) des première et deuxième séries de secteurs comporte une première face latérale (1241, 1641) parallèle à la direction radiale (D_{R}) et une deuxième face latérale (1251, 1651) parallèle à la direction radiale.

8. Procédé selon l'une quelconque des revendications 5 à 7, dans lequel le premier angle (β₁₂₄₀, β₁₂₅₀) non nul par rapport à la direction radiale formé par la portion inférieure en saillie (1240, 1250) des bords latéraux (124, 125) d'un secteur angulaire (120) de la première série de secteurs est compris entre 18° et 45°.

## Patentansprüche

1. Spritzgießform (100) für die Herstellung eines rotationssymmetrischen Teils aus Verbundmaterial (10), umfassend:
- eine Spindel (110), die dazu bestimmt ist, einen durch Aufwickeln gebildeten Faservorformling (20) zu tragen, wobei die Spindel eine ringförmige Wand (111) umfasst, deren Profil der Außenfläche dem Profil der Innenfläche (14) des herzustellenden Teils entspricht,
- mehrere Gegenform-Winkelsektoren (120, 160), die auf der Spindel zusammengebaut sind und dazu bestimmt sind, die Form zu schließen und den auf die Spindel aufgewickelten Faservorformling (20) zu verdichten, wobei jeder Winkelsektor (120) eine ringförmige Basis (121) umfasst, die dazu bestimmt ist, mit dem Faservorformling in Kontakt zu gelangen, wobei die ringförmige Basis sich zwischen einer ersten und einer zweiten Längskante (122, 123) einer axialen Richtung (D_{A}) folgend und zwischen einer ersten und einer zweiten Seitenkante (124, 125) einer Umfangsrichtung (Dc) folgend erstreckt, wobei die erste Seitenkante (124) der ringförmigen Basis (121) eines Winkelsektors (120) mit einer zweiten Seitenkante (165) der ringförmigen Basis (161) eines benachbarten Winkelsektors (160) in Kontakt steht,
wobei die mehreren Winkelsektoren eine erste Reihe von Winkelsektoren (120) und eine zweite Reihe von Winkelsektoren (160) umfassen, **dadurch gekennzeichnet, dass** die erste und die zweite Seitenkante (124, 125) eines jeden Winkelsektors der ersten Reihe von Sektoren (120) jeweils einen vorspringenden unteren Abschnitt (1240, 1250) beinhalten, der einen ersten Winkel (β₁₂₄₀, β₁₂₅₀) ungleich null in Bezug auf eine radiale Richtung (D_{R}) bildet, wobei die erste und zweite Seitenkante (164, 165) eines jeden Winkelsektors der zweiten Reihe von Sektoren (160) jeweils einen eingezogenen unteren Abschnitt (1640, 1650) aufweisen, der einen zweiten Winkel (β₁₆₄₀, β₁₆₅₀) ungleich null in Bezug auf eine radiale Richtung (D_{R}) bildet, wobei der erste Winkel (β₁₂₄₀, β₁₂₅₀) und der zweite Winkel (β₁₆₄₀, β₁₆₅₀) das gleiche Maß aufweisen.

2. Spritzgießform nach Anspruch 1 oder 2, wobei jeder Winkelsektor (120, 160) der ersten und zweiten Reihe von Sektoren eine erste Seitenfläche (1241, 1641) parallel zu der radialen Richtung (D_{R}) und eine zweite Seitenfläche (1251, 1551) parallel zu der radialen Richtung beinhaltet.

3. Spritzgießform nach Anspruch 2, wobei jeder Winkelsektor (120, 160) eine erste und eine zweite Nut (1242, 1252, 1642, 1652) beinhaltet, die jeweils an der ersten und der zweiten Seitenfläche (1241, 1251, 1641, 1651) vorliegen, wobei sich die Nuten der axialen Richtung (D_{A}) folgend erstrecken, wobei sowohl in der ersten Nut (1242, 1642) einer ersten Seitenfläche eines Winkelsektors als auch in der zweiten Nut (1252, 1652) einer zweiten Seitenfläche eines benachbarten Winkelsektors eine Dichtung (150) untergebracht ist.

4. Spritzgießform nach Anspruch 1 oder 2, wobei der erste Winkel (β₁₂₄₀, β₁₂₅₀) ungleich null in Bezug auf die radiale Richtung, der durch den unteren vorspringenden Abschnitt (1240, 1250) der Seitenkanten (124, 125) eines Winkelsektors (120) der ersten Reihe von Sektoren gebildet wird, zwischen 18° und 45° beträgt.

5. Verfahren zum Schließen einer Spritzgießform (100) für die Herstellung eines rotationssymmetrischen Teils aus Verbundmaterial, wobei die Form umfasst:
- eine Spindel (110), die eine Faservorform (20) trägt, welche durch Aufwickeln eines Faserbandes erhalten wird, wobei die Spindel eine ringförmige Wand (111) umfasst, deren Profil der Außenfläche dem Profil der Innenfläche (14) des herzustellenden Teils entspricht,
- mehrere Winkelsektoren (120), die eine ringförmige Basis (121) umfassen, die dazu bestimmt ist, mit der Fasertextur (20) in Kontakt zu gelangen, wobei die ringförmige Basis sich zwischen einer ersten und einer zweiten Längskante (122, 123) einer axialen Richtung (D_{A}) folgend und zwischen einer ersten und einer zweiten Seitenkante (124, 125) einer Umfangsrichtung (Dc) folgend erstreckt,
wobei die mehreren Winkelsektoren eine erste Reihe von Winkelsektoren (120) und eine zweite Reihe von Winkelsektoren (160) umfassen, wobei die erste und die zweite Seitenkante (124, 125) eines jeden Winkelsektors der ersten Reihe von Sektoren (120) jeweils einen vorspringenden unteren Abschnitt (1240, 1250) beinhalten, der einen ersten Winkel (β₁₂₄₀, β₁₂₅₀) ungleich null in Bezug auf eine radiale Richtung (D_{R}) bildet, wobei die erste und zweite Seitenkante (164, 165) eines jeden Winkelsektors der zweiten Reihe von Sektoren (160) jeweils einen eingezogenen unteren Abschnitt (1640, 1650) aufweisen, der einen zweiten Winkel (β₁₆₄₀, β₁₆₅₀) ungleich null in Bezug auf eine radiale Richtung (D_{R}) bildet, wobei der erste Winkel (β₁₂₄₀, β₁₂₅₀) und der zweite Winkel (β₁₆₄₀, β₁₆₅₀) das gleiche Maß aufweisen, und dass das Verfahren das Positionieren und Befestigen eines jeden Winkelsektors (120, 160) der Reihe nach auf der Spindel (110) umfasst, wobei die ringförmige Basis (121, 161) eines jeden Sektors den Abschnitt der Faservorform, der ihr gegenüber vorliegt, verdichtet, wobei die Seitenkanten (124, 125) der ringförmigen Basis (121) eines Winkelsektors (120) der ersten Reihe von Sektoren, die gerade positioniert werden, mit den Seitenkanten (164, 165) der ringförmigen Basis (161) von Winkelsektoren (160) der zweiten Reihe von Sektoren, die bereits auf der Spindel befestigt wurden, in Kontakt gehalten werden.

6. Verfahren nach Anspruch 5, wobei die Winkelsektoren (160) der zweiten Reihe von Sektoren zuerst auf solche Weise in einem bestimmten Abstand voneinander auf der Spindel (110) positioniert und befestigt werden, dass ein Zwischenraum zwischen zwei Winkelsektoren (160) der zweiten Reihe von Sektoren eingebracht wird, wobei die Winkelsektoren (120) der ersten Reihe von Sektoren in der Folge in den Zwischenräumen, die zwischen den Winkelsektoren (160) der zweiten Reihe von Sektoren eingebracht wurden, auf der Spindel positioniert und befestigt werden.

7. Verfahren nach Anspruch 5 oder 6, wobei jeder Winkelsektor (120, 160) der ersten und zweiten Reihe von Sektoren eine erste Seitenfläche (1241, 1641) parallel zu der radialen Richtung (D_{R}) und eine zweite Seitenfläche (1251, 1651) parallel zu der radialen Richtung aufweist.

8. Verfahren nach einem der Ansprüche 5 bis 7, wobei der erste Winkel (β₁₂₄₀, β₁₂₅₀) ungleich null in Bezug auf die radiale Richtung, der durch den unteren vorspringenden Abschnitt (1240, 1250) der Seitenkanten (124, 125) eines Winkelsektors (120) der ersten Reihe von Sektoren gebildet wird, zwischen 18° und 45° beträgt.

## Claims

1. An injection mold (100) for the manufacture of an axisymmetric part of composite material (10) comprising:
- a mandrel (110) intended to support a fibrous preform (20) formed by winding, the mandrel comprising an annular wall (111) the profile of the outer surface of which corresponds to that of the inner surface (14) of the part to be manufactured,
- a plurality of counter-mold angular sectors (120, 160) assembled on the mandrel and intended to form the mold and to compact the fibrous preform (20) wound on the mandrel, each angular sector (120) comprising an annular base intended to come into contact with the fibrous preform, the annular base extending between the first and second longitudinal edges (122, 123) in an axial direction (D_{A}) and between the first and second lateral edges (124, 125) in a circumferential direction (D_{C}), the first lateral edge (124) of the annular base (121) of an angular sector (120) being in contact with a second lateral edge (165) of the annular base (161) of an adjacent annular sector (160),
the plurality of angular sectors comprising a first series of angular sectors (120) and a second series of angular sectors (160),
**characterized in that** the first and second lateral edges (124, 125) of each angular sector of the first series of sectors (120) each including a protruding lower portion (1240, 1250) forming a first nonzero angle (β₁₂₄₀, β₁₂₅₀) relative to a radial direction (D_{R}), the first and second lateral edges (164, 165) of each angular sector of second series of sectors (160) each including a recessed lower portion (1640, 1650) forming a second nonzero angle (β₁₆₄₀, β₁₆₅₀) relative to a radial direction (D_{R}), the first angle (β₁₂₄₀, β₁₂₅₀) and the second angle having the same extent (β₁₆₄₀, β₁₆₅₀).

2. The injection mold according to claim 1, wherein each angular sector (120, 160) of the first and second series of sectors includes a first lateral face (1241, 1641) parallel to the radial direction (D_{R}) and a second lateral face (1251, 1651) parallel to the radial direction.

3. The injection mold according to claim 2, wherein each angular sector (120, 160) includes of the first and second grooves (1242, 1252, 1642, 1652) present respectively on the first and second lateral faces (1241, 1251, 1641, 1651), the grooves extending in the axial direction (D_{A}), a gasket (150) being housed both in the first groove (1242, 1642) of a first lateral face of an angular sector and in the second groove (1252, 1652) of a second lateral face of an adjacent angular sector.

4. The injection mold according to claim 1 or 2, wherein the first nonzero angle (β₁₂₄₀, β₁₂₅₀) relative to the radial direction formed by the protruding lower portion (1240, 1250) of the lateral edges (124, 125) of an angular sector (120) of the first series of sectors is comprised between 18° and 45°.

5. A method of closing an injection mold (100) for the manufacture of an axisymmetric part of composite material, the mold comprising:
- a mandrel (110) supporting a fibrous preform (20) obtained by winding a fibrous strip, the mandrel comprising an annular wall (111), the profile of the outer surface of which corresponds to that of the inner surface (14) of the part to be manufactured,
- a plurality of angular sectors (120) comprising an annular base (121) intended to come into contact with the fibrous texture (20), the annular base extending between the first and second longitudinal edges (122, 123) in an axial direction (D_{A}) and between the first and second lateral edges (124, 125) in a circumferential direction (D_{C}),
the plurality of angular sectors comprising a first series of angular sectors (120) and a second series of angular sectors (160), the first and second lateral edges (124, 125) of each angular sector of the first series of sectors (120) each including a protruding lower portion (1240, 1250) forming a first nonzero angle (β₁₂₄₀, β₁₂₅₀) relative to a radial direction (D_{R}), the first and second lateral edges (164, 165) of each angular sector of the second series of sectors (160) each including a recessed lower portion (1640, 1650) forming a second nonzero angle (β₁₆₄₀, β₁₆₅₀) relative to a radial direction (D_{R}), the first angle (β₁₂₄₀, B₁₂₅₀) and the second angle (β₁₆₄₀, β₁₆₅₀) having the same extent and in that the method comprises the successive positioning and attachment of each angular sector (120, 160) on the mandrel (110), the annular base (121, 161) of each sector compacting the fibrous preform portion present facing it, the lateral edges (124, 125) of the annular base (121) of an angular sector (120) of the first series of sectors during positioning being held in contact with the lateral edges (164, 165) of the annular base (161) of the angular sectors (160) of the second series of sectors already attached to the mandrel.

6. The method according to claim 5, wherein the angular sectors of the second series of sectors (160) are first positioned and fixed on the mandrel (110) at a predetermined distance from one another so as to provide a space between two angular sectors (160) of the second series of sectors, the angular sectors (120) of the first series of sectors then being positioned and attached to the mandrel in the spaces provided between the angular sectors (160) of the second series of sectors.

7. The method according to claim 5 or 6, wherein each angular sector (120, 160) of the first and second series of sectors includes a first lateral face (1241, 1641) parallel to the radial direction (D_{R}) and a second lateral face (1251, 1651) parallel to the radial direction.

8. The method according to anyone claims 5 to 7, wherein the first nonzero angle (β₁₆₄₀, β₁₆₅₀) relative to the radial direction formed by the protruding lower portion (1240, 1250) of the lateral edges (124, 125) of an angular sector (120) of the first series of sectors is comprised between 18° and 45°.
